# EUROPEAN PATENT APPLICATION

(11) **EP 4 395 364 A1**
(43) Date of publication of application: **03.07.2024**
(21) Application number: 21960333.9
(22) Date of filing: 15.10.2021
(51) Int. Cl.: H04Q 11/00

(54) **EXCHANGE APPARATUS, EXCHANGE METHOD, AND EXCHANGE DEVICE**

(71) Applicant: Huawei Technologies Co., Ltd., Shenzhen, Guangdong 518129 (CN)
(72) Inventor: LAM, Wan, Shenzhen, Guangdong 518129 (CN)
(74) Representative: Maiwald GmbH
(86) International application number: PCT/CN2021/124233
(87) International publication number: WO 2023/060604

(57) **Abstract**

This application relates to the communication field, and discloses a switching apparatus, a switching method, and a switching device, to prevent uneven heating of the switching apparatus. The switching apparatus includes a plurality of switching blocks and corresponding input/output ports. The plurality of switching blocks are configured to receive data through the corresponding input/output ports, forward the data to a target switching block of the data in the plurality of switching blocks, and send the data through an input/output port corresponding to the target switching block. The plurality of switching blocks include a first switching block that is not the target switching block of the data. The plurality of switching blocks are divided into at least two groups, and each switching block includes a first switching interface and a second switching interface. The first switching interface is configured to switch data with a switching block in a same group, and the second interface is configured to switch data with a switching block in a different group. The switching apparatus further includes a control circuit, configured to enable, when the first switching block receives the data through a corresponding input/output port or the second switching interface, the first switching block to select the first switching interface to forward the data.

## Description

### TECHNICAL FIELD

This application relates to the communication field, and in particular, to a switching apparatus, a switching method, and a switching device.

### BACKGROUND

During switching network communication, a switching chip in a switching device usually needs to process a large quantity of data packet switching services. Processing complexity of circuits in the switching chip is different. Therefore, power consumption (heat amount) of the circuits is also different. As a result, a temperature of a specific area of the switching chip is far higher than that of another area, and this brings difficulty in design of power supply and heat dissipation of the switching chip.

### SUMMARY

Embodiments of this application provide a switching apparatus, a switching method, and a switching device, to prevent uneven heating of the switching apparatus.

To achieve the foregoing objective, the following technical solutions are used in embodiments of this application.

According to a first aspect, a switching apparatus is provided, including a plurality of switching blocks and input/output ports corresponding to the plurality of switching blocks. The plurality of switching blocks are configured to receive data through the corresponding input/output ports, forward the data to a target switching block of the data in the plurality of switching blocks, and send the data through an input/output port corresponding to the target switching block. The plurality of switching blocks include a first switching block and the first switching block is not the target switching block of the data. The plurality of switching blocks are divided into at least two groups, and each switching block includes a first switching interface and a second switching interface. The first switching interface is configured to switch data with a switching block in a same group, and the second interface is configured to switch data with a switching block in a different group. The switching apparatus further includes a control circuit, configured to control, when the first switching block receives the data through a corresponding input/output port or the second switching interface, the first switching block to select the first switching interface to forward the data.

According to the switching apparatus provided in this embodiment of this application, the switching blocks are divided into at least two groups, intra-group switching blocks switch data through the first switching interface, and inter-group switching blocks switch data through the second switching interface. For the data that is received through the second switching interface and that is switched between groups, or for data that is received through the input/output port and that is switched from the outside, the switching block performs intra-group switching through the first switching interface, to implement load balancing and similar power consumption of switching blocks in a same group, so that temperatures of some areas of the switching apparatus are prevented from being far higher than those of other areas, and difficulty in design of power supply and heat dissipation is reduced.

In a possible implementation, the control circuit is further configured to control, when the first switching block receives the data through the corresponding input/output port or the second switching interface, the first switching block to select both the first switching interface and the second switching interface to forward the data. For the data that is received through the second switching interface and that is switched between groups, or for the data that is received through the input/output port and that is switched from the outside, the switching block performs intra-group switching through the first switching interface and performs inter-group switching through the second switching interface, to implement load balancing and similar power consumption of switching blocks in a same group, and a switching block in a different group also participates in data switching and power consumption is similar. Therefore, temperatures of some areas of the switching apparatus are prevented from being far higher than those of other areas, and the difficulty in the design of the power supply and the heat dissipation is reduced.

In a possible implementation, the control circuit is further configured to control, when the first switching block receives the data through the first switching interface, the first switching block to select the second switching interface or the corresponding input/output port to forward the data. For the data that is received through the first switching interface and that is switched within a group, the switching block performs inter-group switching through the second switching interface, or directly forwards the data through the input/output port, so that a switching block in a different group also participates in data switching and power consumption is similar. Therefore, temperatures of some areas of the switching apparatus are prevented from being far higher than those of other areas, and the difficulty in the design of the power supply and the heat dissipation is reduced.

In a possible implementation, the switching block further includes a switching circuit. The switching circuit is coupled to the corresponding input/output port, the first switching interface, and the second switching interface. The switching circuit is configured to switch data with another switching block and switch data with the corresponding input/output port through the first switching interface and the second switching interface. The switching circuit may be used for communication between the switching apparatus and an external device, and may also be used for communication between the switching apparatus and switching blocks in the switching apparatus, so that a structure of the switching blocks may be more compact.

In a possible implementation, the switching block further includes a switching circuit and a routing circuit that are coupled to each other. The switching circuit is coupled to the corresponding input/output port, and the switching circuit is configured to switch data with the routing circuit and the corresponding input/output port. The routing circuit is coupled to the first switching interface and the second switching interface, and the routing circuit is configured to switch data with another switching block through the first switching interface and the second switching interface. The switching circuit is used for communication between the switching apparatus and the external device, and the routing circuit is used for communication between the switching apparatus and switching blocks in the switching apparatus, so that circuits with different functions are decoupled, and software design and hardware design are simplified.

In a possible implementation, the target switching block is configured to output a plurality of pieces of data through the corresponding input/output port in a sequence of receiving the plurality of pieces of data from the plurality of switching blocks. A reason is that after load balancing, data is switched to the target switching block via different switching blocks. Because processing delays of the switching blocks are different, the data may arrive first and be sent later. Whether reordering is required or difficulty of reordering depends on a used load balancing algorithm.

In a possible implementation, a same group of switching blocks are disposed on different dies. In this way, coupling between more switching apparatuses may be implemented, to help extend a scale of a switching system, and improve a switching capability of the system. In addition, a manner of communication between switching blocks between dies is consistent with a manner of communication between switching blocks on a same die, so that the software design and hardware design are simplified.

In a possible implementation, different groups of switching blocks are disposed on different dies. In this way, the coupling between more switching apparatuses may be implemented, to help extend the scale of the switching system, and improve the switching capability of the system. In addition, the manner of communication between switching blocks between dies is consistent with the manner of communication between switching blocks on a same die, so that the software design and hardware design are simplified.

In a possible implementation, the first switching interfaces of a same group of switching blocks are coupled through a fan-out bus, and the second switching interfaces of different groups of switching blocks are coupled through a fan-out bus. This connection manner enables any switching block to directly send a payload to another coupled switching block without forwarding the payload via another switching block.

In a possible implementation, the switching apparatus is a switching chip. The switching apparatus may alternatively be a switching machine, a switching device, or the like.

In a possible implementation, the switching block refers to a circuit that has a data switching function.

According to a second aspect, a switching method is provided, and is applied to the switching apparatus in the first aspect and any implementations of the first aspect. The method includes: controlling, when a first switching block receives data through a corresponding input/output port or a second switching interface, the first switching block to select a first switching interface to forward the data.

In a possible implementation, the controlling, when a first switching block receives data through a corresponding input/output port or a second switching interface, the first switching block to select a first switching interface to forward the data includes: controlling, when the first switching block receives the data through the corresponding input/output port or the second switching interface, the first switching block to select both the first switching interface and the second switching interface to forward the data.

In a possible implementation, the method further includes: controlling, when the first switching block receives the data through the first switching interface, the first switching block to select the second switching interface or the corresponding input/output port to forward the data.

According to a third aspect, a switching device is provided, including the switching apparatus in any one of the first aspect and a memory coupled to the switching apparatus, where the switching apparatus is a switching chip.

According to a fourth aspect, a computer-readable storage medium storing one or more programs is provided. The one or more programs include instructions; and when the instructions are executed by a switching apparatus, the switching apparatus is enabled to perform the method in any one of the second aspect and the implementations of the second aspect.

According to a fifth aspect, a computer program product including instructions is provided. When the instructions are executed by a switching apparatus, the switching apparatus is enabled to perform the method in any one of the second aspect and the implementations of the second aspect.

For technical effects of the second aspect to the fifth aspect, refer to technical effects of any one of the first aspect and the implementations of the first aspect.

### BRIEF DESCRIPTION OF DRAWINGS

FIG. 1 is a schematic diagram of an architecture of a Clos architecture according to an embodiment of this application;
FIG. 2 is a schematic diagram of an architecture of a spine-leaf architecture according to an embodiment of this application;
FIG. 3 is a schematic diagram of an architecture of a switching node in a switching network according to an embodiment of this application;
FIG. 4 is a schematic diagram of a structure of a switching chip according to an embodiment of this application;
FIG. 5 is a schematic diagram of a structure of a switching apparatus according to an embodiment of this application;
FIG. 6 is a schematic diagram of a structure of another switching apparatus according to an embodiment of this application;
FIG. 7 is a schematic diagram of a structure of still another switching apparatus according to an embodiment of this application;
FIG. 8 is a schematic diagram of a structure of a switching block according to an embodiment of this application;
FIG. 9 is a schematic diagram of a structure of another switching block according to an embodiment of this application;
FIG. 10 is a schematic diagram of an architecture of another switching node in a switching network according to an embodiment of this application;
FIG. 11 is a schematic diagram of an architecture of still another switching node in a switching network according to an embodiment of this application;
FIG. 12 is a schematic diagram of connection of switching blocks through a fan-out bus according to an embodiment of this application;
FIG. 13 is a schematic flowchart of a switching method according to an embodiment of this application;
FIG. 14 is a schematic diagram of a structure of yet another switching apparatus according to an embodiment of this application;
FIG. 15 is a schematic diagram of performing a switching method by a switching apparatus according to an embodiment of this application; and
FIG. 16 is a schematic diagram of a structure of a switching device according to an embodiment of this application.

### DESCRIPTION OF EMBODIMENTS

It should be noted that the terms "first", "second", and the like in embodiments of this application are merely intended for distinguishing between features of a same type, and shall not be understood as indicating relative importance, a quantity, a sequence, or the like.

In embodiments of this application, the term "example" or "for example" is for representing giving an example, an illustration, or a description. Any embodiment or design scheme described as an "example" or "for example" in embodiments of this application should not be explained as being more preferred or having more advantages than another embodiment or design scheme. Exactly, use of the expression "example" or "for example" or the like is intended to present a relative concept in a specific manner.

The terms "coupling" and "connection" in embodiments of this application should be understood in a broad sense. For example, the terms may refer to a physical direct connection, or may refer to an indirect connection implemented by using an electronic component, for example, a connection implemented by using a resistor, an inductor, a capacitor, or another electronic component.

Some concepts in this application are first described.

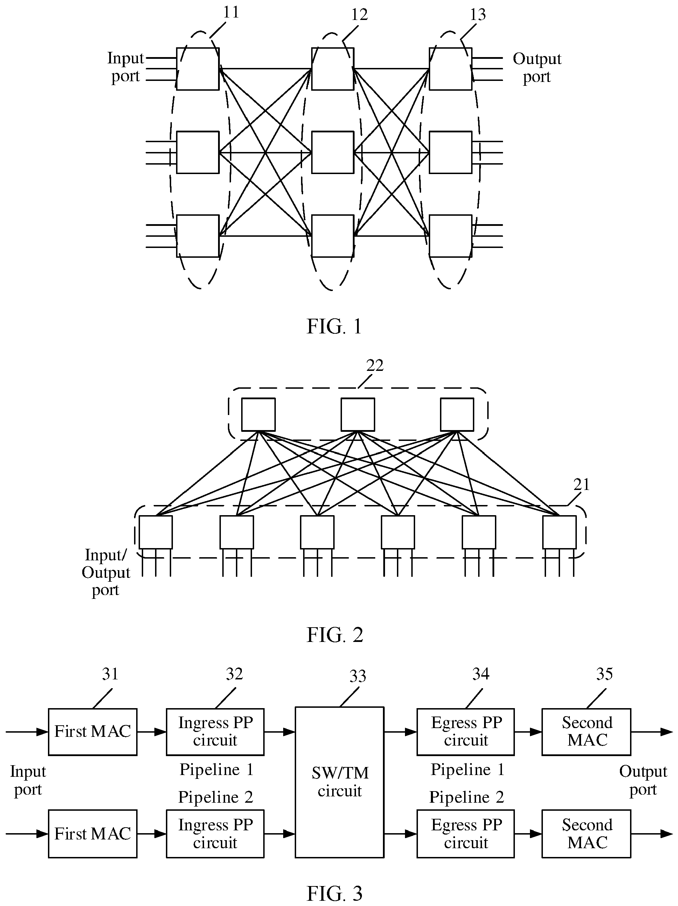

Clos (Clos) architecture: A Clos architecture is a structure for describing a multi-level circuit switching network. As shown in FIG. 1, the Clos architecture includes a plurality of ingress (ingress) nodes 11, a plurality of intermediate nodes 12, and a plurality of egress (egress) nodes 13. The ingress node 11, the intermediate node 12, and the egress node 13 may be a switching machine or a switching chip. Each ingress node 11 includes a plurality of input ports, and each egress node 13 includes a plurality of output ports. Each ingress node 11 is connected to each intermediate node 12 (that is, full connection), and each intermediate node 12 is connected to each egress node 13 (that is, full connection). An advantage of this architecture is that load balancing distribution can be implemented.

In actual products, a data flow direction is not unidirectional. Based on different data flow directions, a switching machine or a switching chip may be used as both an ingress node and an egress node in the switching network, so that a spine-leaf (spine-leaf) structure is formed.

Spine-leaf architecture: As shown in FIG. 2, the spine-leaf architecture is obtained by using the ingress node 11 and the egress node 13 in the Clos architecture as a leaf (leaf) node 21 and using the intermediate node 12 as a spine (spine) node 22. In comparison with the Clos (Clos) architecture, advantages of the spine-leaf architecture are that the spine-leaf architecture provides more reliable networking connections, failure of any node does not affect running of the entire architecture, and switching efficiency between the leaf nodes 21 is higher. It is assumed that a quantity of leaf nodes 21 is N (six in FIG. 2), and a quantity of spine nodes 22 is M (three in FIG. 2), in this case, M spine nodes 22 can implement N x N (6 x 6 in FIG. 2) full switching, where N is a positive integer.

A bandwidth between the leaf node 21 and the spine node 22 may be greater than, equal to, or less than a bandwidth (an external bandwidth) of an input/output port of the leaf node 21. FIG. 2 is used as an example. It is assumed that the bandwidth of the input/output port of each leaf node 21 is 9.6 Tbps, each leaf node 21 may be connected to the spine nodes 22 over three 3.2 Tbps lines. In this case, the bandwidth between the leaf node 21 and the spine node 22 is equal to the bandwidth of the input/output port of the leaf node 21. Alternatively, each leaf node 21 may be connected to the spine nodes 22 over three 1.6 Tbps lines. In this case, the bandwidth between the leaf node 21 and the spine node 22 is less than the bandwidth of the input/output port of the leaf node 21, and costs can be reduced by bandwidth convergence. Alternatively, each leaf node 21 may be connected to the spine nodes 22 over three 4.8 Tbps lines. In this case, the bandwidth between the leaf node 21 and the spine node 22 is greater than the bandwidth of the input/output port of the leaf node 21, and transmission performance can be improved by speedup (speedup).

Non-blocking switching: If a switching apparatus can successfully establish any routing request to any idle output port without interfering with other switched data, this process is referred to as the non-blocking switching, and the switching apparatus is referred to as a non-blocking switching apparatus.

As shown in FIG. 3, each switching node (for example, the foregoing leaf node 21 and the spine node 22) in the switching network may include: first media access control (media access control, MAC) 31, an ingress (ingress) data packet processing (packet processing, PP) circuit 32, a switch/traffic manager (switch/traffic manager, SW/TM) circuit 33, an egress (egress) PP circuit 34, and second MAC 35. The first MAC 31 is coupled to a plurality of input (input) ports, and the second MAC 35 is coupled to a plurality of output (output) ports. The first MAC 31 and the second MAC 35 may be same MAC or different MAC, and the input port and the output port may be a same port or different ports.

The input port and the output port are configured to provide a high-speed interface for communication with another switching apparatus, for example, a 50 Gbps serializer/deserializer (serializer/deserializer, SerDes) interface or an optical (optical) interface.

The first MAC 31 and the second MAC 35 are configured to provide a standard Ethernet (Ethernet) protocol interface to process a data packet according to the Ethernet protocol, for example, perform data check, frame delimitation, and receiving and sending.

A transmission path of a data packet may be referred to as a pipeline (pipeline). FIG. 3 shows two pipelines as an example. Each pipeline may include an ingress pipeline (ingress pipeline) and an egress pipeline (egress pipeline). A circuit for data processing of the ingress pipeline is the ingress PP circuit 32, and a circuit for data processing of the egress pipeline is the egress PP circuit 34. The ingress PP circuit 32 is configured to process a received data packet (packet) to obtain a payload (payload) and data in a packet header, and send the payload and the data in the packet header to the SW/TM circuit 33. That the data packet is processed includes performing protocol parser (parser) on the data packet to obtain the payload and the data in the packet header, searching for a destination port of the data packet through table lookup (table lookup), editing the data in the packet header, and the like. The egress PP circuit 34 is configured to process the payload and the data in the packet header to obtain the data packet, so as to implement an inverse process of processing performed by the ingress PP circuit 32, for example, to edit the data in the packet header, and re-encapsulate the payload based on the data in the packet header to obtain the data packet.

The ingress PP circuit 32 and the egress PP circuit 34 may include a multiple-stage (multiple-stage) match action (match action, MA) circuit. A larger quantity of stages of the MA circuit, a function supported by the pipeline is more complex. The ingress PP circuit 32 and the egress PP circuit 34 may have programmability (programmability) to implement another function.

A TM function in the SW/TM circuit 33 is for adding the payload in the data packet and the data in the packet header to a queue (queue) based on the data in the packet header of the data packet (for example, a 5-tuple and a destination port of the transmission control protocol/internet protocol (transmission control protocol/internet protocol, TCP/IP)), and scheduling these queues according to a specific quality of service (quality of service, QoS) policy.

An SW function in the SW/TM circuit 33 is for writing the payload in the received data packet and the data in the packet header into a buffer (buffer), and switching the payload in the data packet and the data in the packet header to a destination output port based on a scheduling result of the TM function.

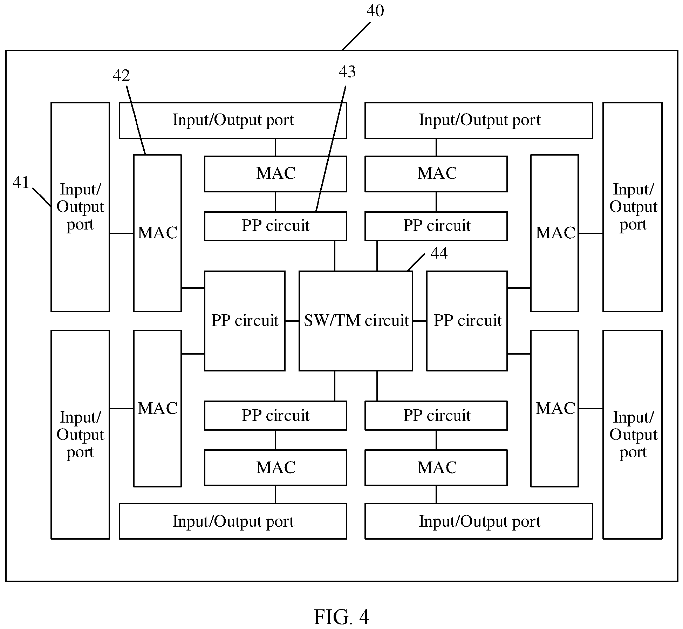

As shown in FIG. 4, a switching chip based on the architecture shown in FIG. 3 is provided. The switching chip 40 has a star structure, and the switching chip 40 sequentially includes an input/output port 41, MAC 42, a PP circuit 43, and an SW/TM circuit 44 according to a data flow direction. The input/output port 41 is configured to implement functions of the input port and the output port in FIG. 3. The MAC 42 is configured to implement functions of the first MAC 31 and the second MAC 35 in FIG. 3. The PP circuit 43 is configured to implement functions of the ingress PP circuit 32 and the egress PP circuit 34 in FIG. 3. The SW/TM circuit 44 is configured to implement functions of the SW/TM circuit 33 in FIG. 3.

A layout (layout) of the foregoing switching chip is formed based on a processing flow of a data packet: After the data packet is input from the input/output port 41, the MAC 42 processes the data packet according to the Ethernet protocol, an uplink PP circuit in the PP circuit 43 processes the data packet to obtain a payload and data in a packet header, and sends the payload and the data to the SW/TM circuit 44 for scheduling and switching. The switched payload and the data in the packet header are processed by a downlink PP circuit in the PP circuit 43, and are re-encapsulated to obtain a data packet. The MAC 42 sends the data packet out through the input/output port 41.

It can be learned that the switching chip has the following problems.

Poor realizability: Each circuit is usually independently developed and then integrated, and this causes difficulty in top-down design (for example, a layout of circuits and connections between the circuits) of the switching chip. In addition, because processing complexity of each circuit is different, power consumption of each circuit is also different. As a result, a temperature of a specific area of the switching chip is far higher than that of another area, and this brings difficulty in design of power supply and heat dissipation.

High delay: All data packets switched between the input/output ports 41 need to be transmitted to the SW/TM circuit 44 on an innermost side of the chip via the MAC 42 and the PP circuit 43 sequentially, and then be transmitted out via the PP circuit 43 and the MAC 42 sequentially. That is, even a data packet that is sent and received through one input/output port 41 needs to be forwarded in such a way to be completed. As a result, a switching delay between any input/output ports is high.

Poor scalability: When two or more switching chips need to be interconnected to extend functions, a communication protocol between the switching chips needs to be defined to coordinate functions of circuits in different switching chips.

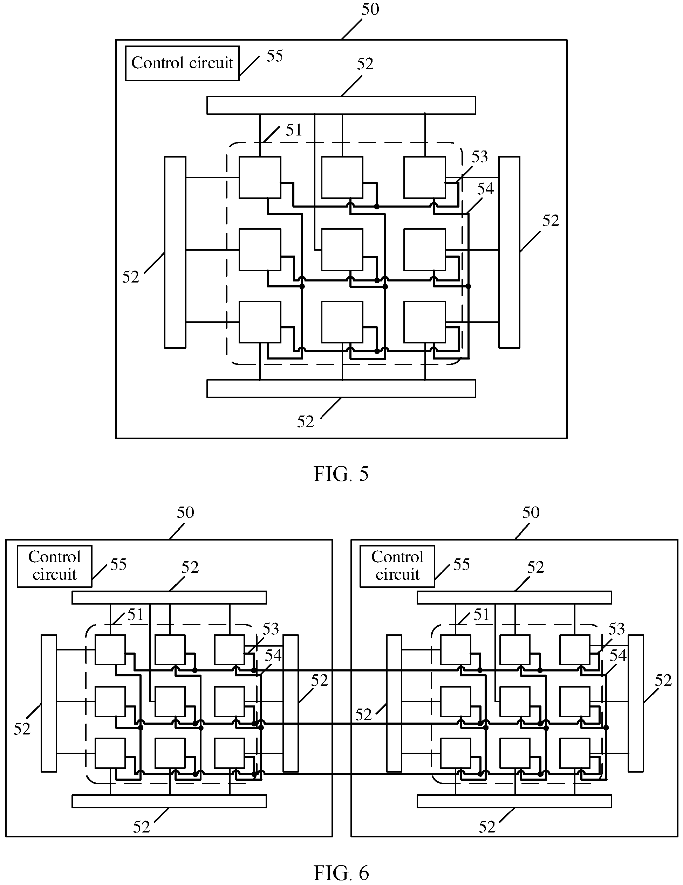

An embodiment of this application provides a switching apparatus. The switching apparatus may be a switching chip, a switching machine, a switching device, or the like. As shown in FIG. 5, the switching apparatus 50 includes a plurality of switching blocks 51, a plurality of input/output ports 52 that are separately coupled (or referred to as corresponding) to the plurality of switching blocks 51, and a control circuit 55. The switching block refers to a circuit that has a data switching function. The plurality of switching blocks 51 can receive (one or more pieces of) data through the corresponding input/output ports 52, forward the data to a target switching block of the data in the plurality of switching blocks 51, and send the data out through an input/output port 52 corresponding to the target switching block. The control circuit 55 is configured to control the switching block 51 to forward the data. The control circuit 55 may be located in the switching apparatus 50 or may be located in each switching block 51.

The plurality of switching blocks 51 are divided into at least two groups of switching blocks. For example, it is assumed that the switching apparatus 50 includes M*N switching blocks 51. These switching blocks 51 may be arranged in M rows and N columns, and M and N are positive integers. For example, in FIG. 5, M and N are all equal to 3. A row of switching blocks 51 may be used as a group of switching blocks 51, and a column of switching blocks 51 may be used as different groups of switching blocks 51. Alternatively, a column of switching blocks 51 may be used as a group of switching blocks 51, and a row of switching blocks 51 may be used as different groups of switching blocks 51. A same group of switching blocks 51 are coupled through a first bus 53, and different groups of switching blocks 51 are coupled through a second bus 54.

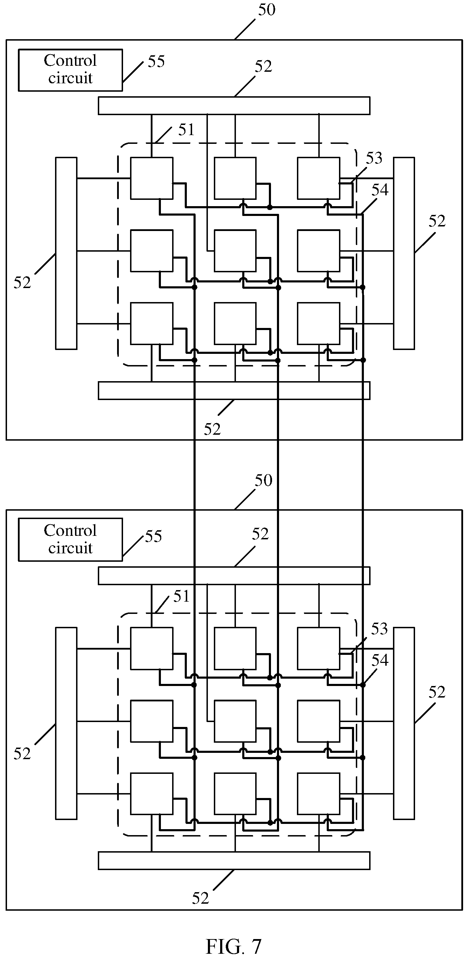

An example in which the switching apparatus is a switching chip is used. The plurality of switching blocks 51 may be disposed on a same die (die), and the plurality of input/output ports 52 may be disposed on a periphery of the die and coupled to the plurality of switching blocks 51. With the development of technologies, for example, by using a 3 dimension (3 dimension, 3D) stacking technology, the plurality of switching blocks 51 may alternatively be disposed on a plurality of dies. As shown in FIG. 6, a same group of switching blocks may be disposed in switching apparatuses 50 located on different dies, and switching blocks 51 in the switching apparatuses 50 located on different dies may be coupled to each other through the first bus 53. As shown in FIG. 7, different groups of switching blocks (for example, a first group of switching blocks and a second group of switching blocks mentioned below) may be disposed in switching apparatuses 50 on different dies, and switching blocks 51 in the switching apparatuses 50 located on different dies may be coupled to each other through the second bus 54. It should be noted that, coupling manners in FIG. 6 and FIG. 7 may alternatively be combined to implement coupling between more switching apparatuses 50, to help extend a scale of a switching system and improve a switching capability of the system. In addition, a manner of communication between switching blocks 51 between dies is consistent with a manner of communication between switching blocks 51 on a same die, so that software design and hardware design are simplified.

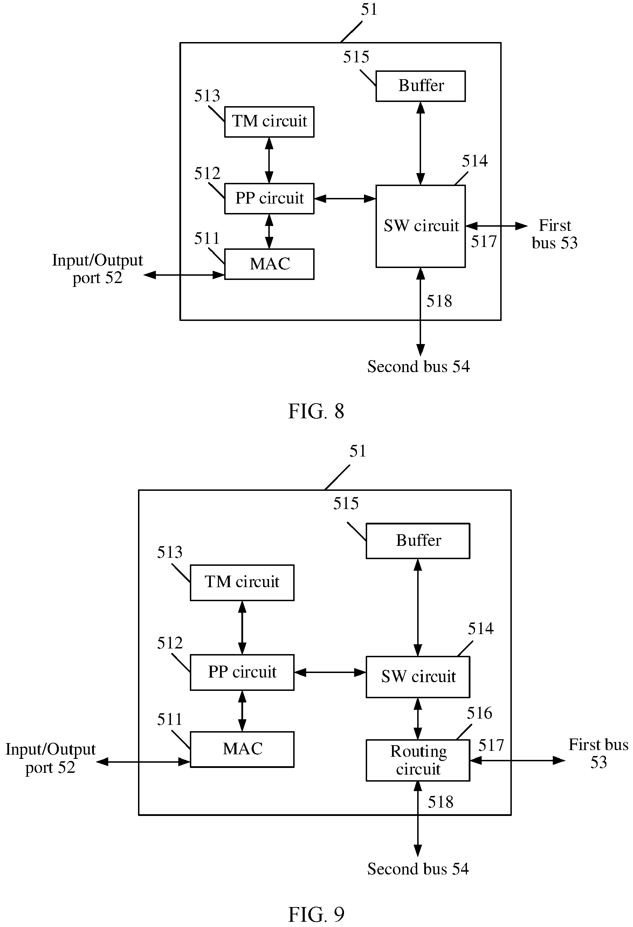

As shown in FIG. 8, each switching block 51 includes at least an SW circuit 514, a plurality of first switching interfaces 517, and a plurality of second switching interfaces 518, to implement the data switching function. The switching block 51 may further include MAC 511, a PP circuit 512, a TM circuit 513, and a buffer 515. The first switching interface 517 is coupled to the first bus 53, and is configured to switch data with a switching block 51 in a same group. The second switching interface 518 is coupled to the second bus 54, and is configured to switch data with a switching block 51 in a different group. Optionally, as shown in FIG. 9, each switching block 51 further includes a routing circuit 516.

It should be noted that, in addition to the SW circuit 514, each switching block 51 may include a part of or all circuits of the MAC 511, the PP circuit 512, and the TM circuit 513, and remaining circuits may be disposed on a periphery of the switching block 51. For example, each switching block 51 may include the PP circuit 512, the TM circuit 513, and the SW circuit 514, and the MAC 511 may be disposed on the periphery of the switching block 51. In addition, each switching block 51 may further include more circuits to implement more functions, for example, may include a circuit that supports functions such as statistics, computing, data processing, telemetry (telemetry), and in-network computing (in-network computing).

An input/output port 52 is configured to implement functions of the input port and the output port in FIG. 3. The MAC 511 is configured to implement functions of the first MAC 31 and the second MAC 35 in FIG. 3. The PP circuit 512 is configured to implement functions of the ingress PP circuit 32 and the egress PP circuit 34 in FIG. 3. The TM circuit 513 is configured to implement the TM function of the SW/TM circuit 33 in FIG. 3. The SW circuit 514 is configured to implement the SW function of the SW/TM circuit 33 in FIG. 3. It should be noted that the TM circuit 513 and the SW circuit 514 may alternatively be integrated as an SW/TM circuit.

For each switching block 51, the MAC 511 is coupled to the input/output port 52, the MAC 511 is further coupled to the PP circuit 512, the PP circuit 512 is further coupled to the TM circuit 513 and the SW circuit 514, and the SW circuit 514 is further coupled to the buffer 515, where the buffer 515 is configured to buffer the payload in the data packet. That is, the input/output port 52 is coupled to the SW circuit 514 via the MAC 511 and the PP circuit 512. In FIG. 8, the SW circuit 514 may further be coupled to the plurality of first switching interfaces 517 and the plurality of second switching interfaces 518. The SW circuit 514 ca switching data with the corresponding input/output port 52, and can also switch data with another switching block 51 through the plurality of first switching interfaces 517 and the plurality of second switching interfaces 518. In FIG. 9, the routing circuit 516 is coupled to the plurality of first switching interfaces 517 and the plurality of second switching interfaces 518, and the SW circuit 514 is coupled to the plurality of first switching interfaces 517 and the plurality of second switching interfaces 518 via the routing circuit 516. In this case, the SW circuit 514 is configured to switch data with the routing circuit 516 and the corresponding input/output port 52, and the routing circuit 516 is configured to switch data with another switching block 51 through the plurality of first switching interfaces 517 and the plurality of second switching interfaces 518.

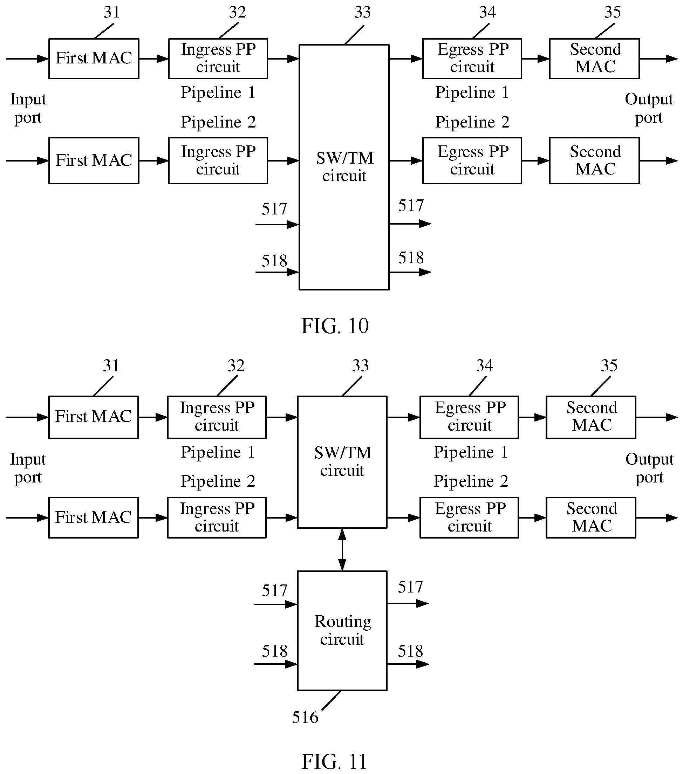

Based on the switching node shown in FIG. 3, the switching apparatus shown in FIG. 8 may correspond to a switching node shown in FIG. 10, and the switching apparatus shown in FIG. 9 may correspond to a switching node shown in FIG. 11. It is assumed that a bandwidth of input/output ports of the switching apparatus is 51.2 Tbps, and the switching apparatus includes four rows and four columns of switching blocks (16 in total). In this case, a bandwidth of an input/output port coupled to each switching block is 51.2/16 = 3.2 Tbps. In FIG. 10 and FIG. 11, each switching block may include two pipelines (pipelines), each pipeline is for processing a 1.6 Tbps data packet, and an uplink PP and a downlink PP are distinguished. In addition, each switching block may alternatively use another architecture, for example, a 3.2 Tbps pipeline is used, and an uplink PP and a downlink PP are not distinguished.

An SW/TM circuit 33 (corresponding to the TM circuit 513 and the SW circuit 514) in FIG. 10 not only provides a function of forwarding data between the input/output ports, but may also provide a function of forwarding data between switching blocks 51 through the first switching interface 517 and the second switching interface 518. In this case, a bandwidth of the first switching interface 517 and a bandwidth of the second switching interface 518 may be greater than, less than, or equal to a bandwidth of an input/output port coupled to the SW/TM circuit 33.

An SW/TM circuit 33 (corresponding to the TM circuit 513 and the SW circuit 514) in FIG. 11 not only provides a function of forwarding data between the input/output ports, but also provides a function of forwarding data between switching blocks 51 via the routing circuit 516 and through the coupled first switching interface 517 and second switching interface 518. In this case, a bandwidth between the SW/TM circuit 33 and the routing circuit 516, the bandwidth of the first switching interface 517, and the bandwidth of the second switching interface 518 may be greater than, less than, or equal to the bandwidth of the input/output port coupled to the SW/TM circuit 33. A bandwidth of the SW/TM circuit and the bandwidth of the coupled input/output port are the same (for example, are all 3.2 Tbps) to ensure non-blocking forwarding of data packets between switching blocks.

A switching table is stored in the switching block 51 (for example, in the buffer 515 of the switching block 51), and the control circuit 55 can modify each entry in the switching table, to control the switching block 51 to perform a switching method provided in embodiments of this application to forward received data. The entry in the switching table indicates a mapping relationship between a destination port of the data and the first switching interface 517, the second switching interface 518, or the input/output port 52 coupled to the switching block 51, so that the SW circuit 514 or the routing circuit 516 in the switching block 51 may determine, based on the destination port of the received data and the mapping relationship, to forward the data to the first switching interface 517, the second switching interface 518, or the corresponding input/output port 52.

For example, for a switching block 51 that is not a target switching block of the data, when the switching block 51 receives data through a corresponding input/output port 52 or a second switching interface 518, the switching block 51 may select, according to the switching table, a first switching interface 517 to forward the data. In other words, for the data that is received through the second switching interface 518 and that is switched between groups, or for the data that is received through the input/output port 52 and that is switched from the outside, the switching block 51 performs intra-group switching through the first switching interface 517, to implement load balancing and similar power consumption of switching blocks 51 in a same group, so that temperatures of some areas of the switching apparatus are prevented from being far higher than those of other areas, and difficulty in design of power supply and heat dissipation is reduced.

For another example, when the switching block 51 receives data through the corresponding input/output port 52 or the second switching interface 518, the switching block 51 may select, based on the switching table, both the first switching interface 517 and the second switching interface 518 to forward the data. In other words, for the data that is received through the second switching interface 518 and that is switched between groups, or for the data that is received through the input/output port 52 and that is switched from the outside, the switching block 51 performs intra-group switching through the first switching interface 517 and performs inter-group switching through the second switching interface 518, to implement load balancing and similar power consumption of switching blocks 51 in a same group, and a switching block 51 in a different group also participates in data switching and power consumption is similar. Therefore, temperatures of some areas of the switching apparatus are prevented from being far higher than those of other areas, and the difficulty in the design of the power supply and the heat dissipation is reduced.

For another example, when the switching block 51 receives data through the first switching interface 517, the switching block 51 may select, based on the switching table, the second switching interface 518 or the corresponding input/output port 52 to forward the data. In other words, for the data that is received through the first switching interface 517 and that is switched within a group, the switching block 51 performs inter-group switching through the second switching interface 518, or directly forwards the data through the input/output port 52, so that a switching block 51 in a different group also participates in data switching and power consumption is similar. Therefore, temperatures of some areas of the switching apparatus are prevented from being far higher than those of other areas, and the difficulty in the design of the power supply and the heat dissipation is reduced.

The following describes a coupling manner and a data switching manner between the switching blocks.

The first bus 53 and the second bus 54 between the switching blocks 51 may be collectively referred to as an inter-block bus (inter-block bus, IBB). The inter-block bus may also be for connecting each switching block 51 with the input/output port 52.

For N switching blocks 51 in any group (for example, any row), an SW circuit 514 of any switching block 51 is coupled to other N-1 (first switching interfaces 517 of) switching modules through a plurality of first switching interfaces 517 separately, that is, first switching interfaces 517 of a same group of switching blocks 51 are coupled. For M switching blocks 51 in different groups (for example, any column), an SW circuit 514 of any switching block 51 is coupled to other M-1 (second switching interfaces 518 of) switching blocks 51 through a plurality of second switching interfaces 518 separately, that is, second switching interfaces 518 of different groups of switching blocks 51 are coupled. In other words, every two of the N switching blocks 51 in a same group are coupled to each other through the first switching interface 517, and every two of the M switching blocks 51 in different groups are coupled to each other through the second switching interface 518, to implement non-blocking data packet transmission between the switching blocks 51.

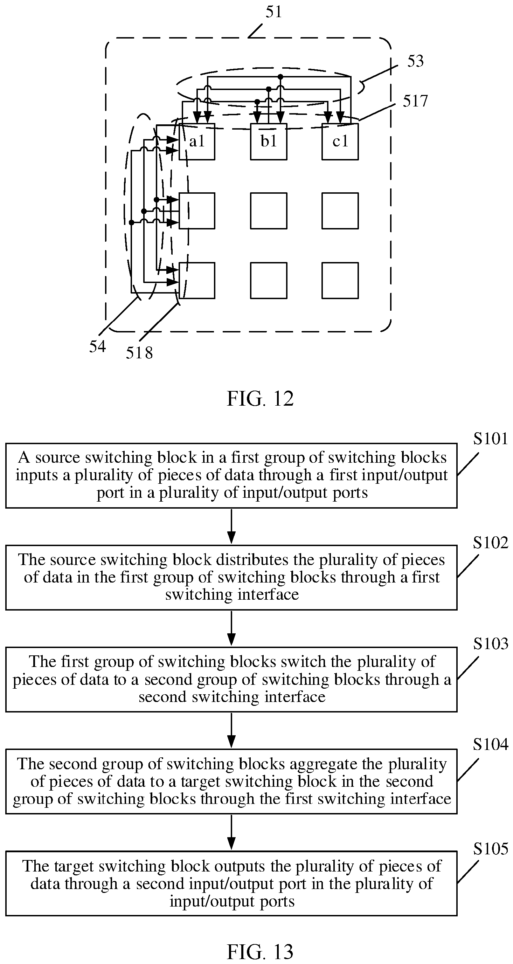

The data packet transmission between the switching blocks is directional. For three switching blocks 51 in a same group, a first switching interface 517 of each switching block 51 is coupled to first switching interfaces 517 of the other two switching blocks 51 in the same group through a first bus 53. For three switching blocks 51 in different groups, a second switching interface 518 of each switching block 51 is coupled to second switching interfaces 518 of the other two switching blocks 51 through a second bus 54. The first bus 53 and the second bus 54 may be referred to as fan-out (fan-out) buses, and a first bus 53 and a second bus 54 in FIG. 12 are 1-to-2 fan-out buses. This connection manner enables any switching block 51 to directly send a payload to another coupled switching block 51.

Another connection manner may alternatively be used through the first bus 53 and the second bus 54. For example, a data packet sent by a switching block a1 to a switching block c1 may be first forwarded by a switching block b 1. Alternatively, a crossbar (crossbar) independent of each switching block may be used to implement switching of the data packet between the switching blocks. A connection manner between the switching blocks 51 is not limited in this application.

A source switching block 51 may request authorization from a target switching block 51 before switching a data packet with the target switching block 51. When an input/output port coupled to the target switching block 51 is blocked, the target switching block 51 may reject the authorization, and the source switching block 51 does not switch the data packet with the target switching block 51 temporarily, to reduce buffer pressure of a newly arrived data packet on a buffer 515 in the target switching block 51.

In addition, after completing processing of an uplink data packet, a PP circuit 34 in the source switching block 51 may generate meta (meta) data, and send the meta data to a PP circuit 34 in the target switching block 51. The PP circuit 34 in the target switching block 51 further processes a downlink data packet based on the meta (meta) data.

Communication of a request and an authorization between the switching blocks 51 and meta data transmission between PP circuits 34 in the switching blocks 51 may share a bus with payload transmission, or may use a bus independent of the bus for the payload transmission. In other words, the first bus 53 and the second bus 54 may include different types of buses. For example, some buses are for the payload transmission, some buses are for the meta data transmission, and some buses are for the communication of the request and the authorization.

The following describes, by using a switching method shown in FIG. 13 as an example, a process in which the foregoing switching apparatus forwards data. As shown in FIG. 13, the switching method performed by the switching apparatus provided in an embodiment of this application includes the following steps.

S101: A source switching block in a first group of switching blocks inputs a plurality of pieces of data through a first input/output port in a plurality of input/output ports.

The plurality of pieces of data may include data in packet headers in a plurality of data packets and payloads in the plurality of data packets.

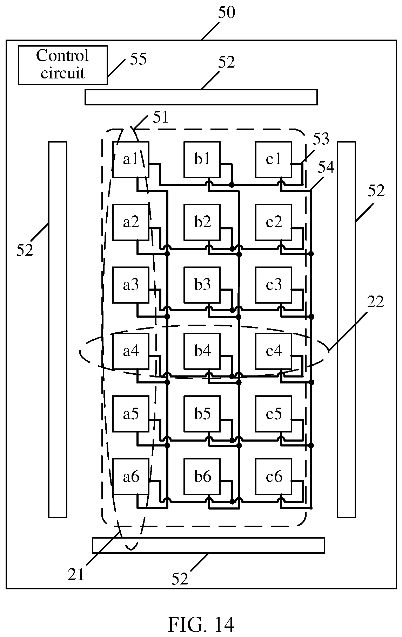

In this embodiment of this application, the switching blocks 51 in the switching apparatus may implement the spine-leaf architecture in FIG. 2. As shown in FIG. 14 (a bus between a switching block 51 and an input/output port 52 is omitted), for a switching apparatus including 6*3 switching blocks 51, three switching blocks 51 in each group may be logically used as one leaf node 21 in FIG. 2, and six switching blocks 51 in different groups may be logically used as one spine node 22 in FIG. 2, to implement the spine-leaf architecture that has three spine nodes and six leaf nodes in FIG. 2. In this case, the architecture of the switching apparatus may be referred to as a distributed spine-leaf (distributed spine-leaf, DSL) architecture, and each switching block 51 is both a leaf node and a spine node. In addition, one or more groups of switching blocks 51 may be logically used as one leaf node 21 in FIG. 2, and more different groups of switching blocks 51 may be logically used as one spine node 22 in FIG. 2. A correspondence between a leaf node or a spine node and the switching block 51 is not limited in this application.

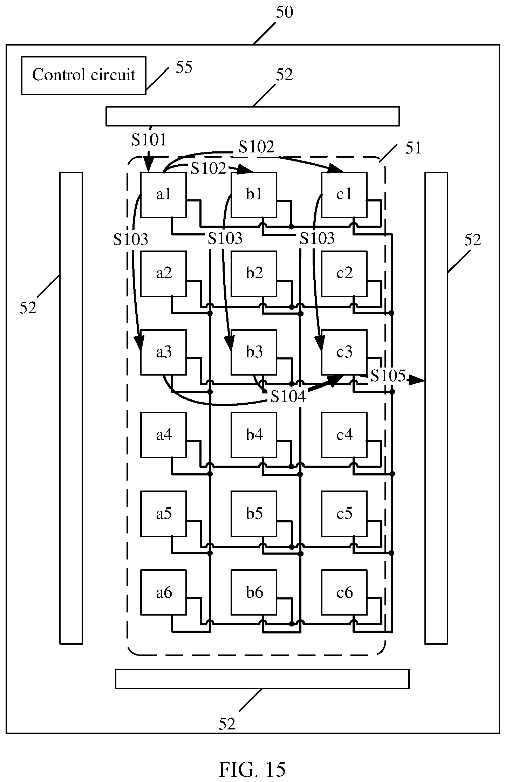

For example, as shown in FIG. 15, it is assumed that a row of switching blocks 51 (in one leaf node 21) is used as a group of switching blocks, and a first group of switching blocks include a switching block a1, a switching block b 1, and a switching block c1, where the switching block a1 is a source switching block 51. The switching block a1 inputs a plurality of first data packets through a first input/output port 52 coupled to the switching block a1. The plurality of first data packets include payloads and data in packet headers, and the plurality of pieces of data include the payloads in the plurality of first data packets and the data in the packet headers. A MAC circuit 511 in the switching block a1 processes the plurality of first data packets according to the Ethernet protocol. APP circuit 512 in the switching block a1 processes the plurality of first data packets to obtain the payloads in the plurality of first data packets and the data in the packet headers, and sends the payloads and the data to a TM circuit 513 and an SW circuit 514 in the switching block a1. The TM circuit 513 in the switching block a1 adds the payloads in the plurality of first data packets and the data in the packet headers to queues based on the data in the packet headers in the plurality of first data packets, and schedules the queues according to a specific QoS policy.

S102: The source switching block distributes the plurality of pieces of data in the first group of switching blocks through a first switching interface.

For example, as shown in FIG. 15, the SW circuit 514 in the switching block a1 writes the payloads and the data in the packet headers in the plurality of first data packets into a buffer 515, and distributes, based on a scheduling result of the TM circuit 513, the payloads in the plurality of first data packets and the data in the packet headers to SW circuits 514 in the first group of switching blocks a1, b1, and c1 through the first switching interface 517. For example, it is assumed that the plurality of first data packets are a data packet A, a data packet B, and a data packet C, the SW circuit 514 in the switching block a1 obtains a payload in the data packet A and data in a packet header, an SW circuit 514 in the switching block b 1 obtains a payload in the data packet B and data in a packet header, and an SW circuit 514 in the switching block c1 obtains a payload in the data packet C and data in a packet header. Load balancing (load balancing, LB) may be implemented between different spine nodes 22.

There are a plurality of specific load balancing algorithms, for example, the plurality of pieces of data are switched to different switching blocks 51 in a same group of switching blocks in turn in a round-robin (round-robin) manner, or the plurality of pieces of data are switched to different switching blocks 51 in a same group of switching blocks based on data (for example, information such as a source port and a destination port) in a packet header of a data packet. In addition, during the load balancing, a policy may be further adjusted based on a load on each spine node 22.

S103: The first group of switching blocks switch the plurality of pieces of data to a second group of switching blocks through a second switching interface.

For example, as shown in FIG. 15, it is assumed that the second group of switching blocks include a switching block a3, a switching block b3, and a switching block c3. The SW circuit 514 in the switching block a1 switches, based on a destination port of the packet header in the data packet A, the payload in the data packet A and the data in the packet header to an SW circuit 514 in the switching block a3 through the second switching interface 518. The SW circuit 514 in the switching block b 1 switches, based on a destination port of the packet header in the data packet B, the payload in the data packet B and the data in the packet header to an SW circuit 514 in the switching block b3 through the second switching interface 518. The SW circuit 514 in the switching block c1 switches, based on a destination port of the packet header in the data packet C, the payload in the data packet C and the data in the packet header to an SW circuit 514 in the switching block c3 through the second switching interface 518. The plurality of pieces of data may be independently switched between different leaf nodes 21 in a same spine node 22. Because the load balancing is implemented between spine nodes 22, a blocking problem may be avoided, and non-blocking switching may be implemented.

S104: The second group of switching blocks aggregate the plurality of pieces of data to a target switching block in the second group of switching blocks through the first switching interface.

For example, as shown in FIG. 15, it is assumed that the switching block c1 in the second group of switching blocks is the target switching block 51, the SW circuit 514 in the switching block a3 switches the payload in the data packet A and the data in the packet header to the SW circuit 514 in the switching block c3, and the SW circuit 514 in the switching block b3 switches the payload in the data packet B and the data in the packet header to the SW circuit 514 in the switching block c3. That is, the payloads in the plurality of first data packets and the data in the packet headers are aggregated to the target switching block 51.

It should be noted that, for a multicast service, there may be a plurality of target switching blocks 51.

S105: The target switching block outputs the plurality of pieces of data through a second input/output port in the plurality of input/output ports.

The target switching block 51 may output the plurality of pieces of data through the second input/output port corresponding to the target switching block 51 in a sequence of receiving the plurality of pieces of data from the plurality of switching blocks 51 (specifically, the source switching blocks 51). In other words, the target switching block 51 may encapsulate the payloads in the plurality of first data packets based on the data in the packet headers in the plurality of first data packets, to obtain a plurality of second data packets, and send the plurality of second data packets in a sequence of receiving the plurality of first data packets.

A reason why the target switching block 51 reorders the plurality of pieces of data is that after the load balancing, the plurality of pieces of data are switched to the target switching block 51 via different switching blocks 51. Because processing delays of the switching blocks 51 are different, the plurality of pieces of data may arrive first and be sent later. Whether reordering is required or difficulty of reordering depends on a used load balancing algorithm.

For example, as shown in FIG. 15, the SW circuit 514 in the switching block c1 sends the payloads in the plurality of first data packets and the data in the packet headers to a PP circuit 512 in the switching block c1. The PP circuit 512 in the switching block c1 processes the payloads in the plurality of first data packets and the data in the packet headers to obtain the plurality of second data packets, and sends the plurality of second data packets to a MAC circuit 511 in the switching block c1. The MAC circuit 511 in the switching block c1 determines the second input/output port 52 based on a target port in the packet headers in the plurality of first data packets, and outputs the plurality of second data packets through the second input/output port 52 based on the sequence of receiving the plurality of first data packets. For example, the target switching blocks 51 are coupled to twelve 800 Gbps input/output ports 52, that is, a bandwidth of the input/output port 52 coupled to the target switching block 51 is 9.6 Tbps, and the target switching block 51 determines the second input/output port 52 from the twelve input/output ports 52 based on the target port of the payload.

According to the switching apparatus, the switching method, and the switching device provided in embodiments of this application, switching and processing of a data packet is implemented by using a plurality of switching blocks that have a same structure, and the plurality of switching blocks form a DSL structure that has the following technical effects.

Good realizability: Chips with different bandwidths may include different quantities of switching blocks, so that difficulty in top-down design of the switching apparatus is avoided. For example, in conventional spine-leaf architecture design, if a switching apparatus whose bandwidth is 25.6 Tbps includes four leaf nodes whose bandwidths are 6.4 Tbps and four spine nodes whose bandwidths are 6.4 Tbps, design of the leaf nodes and the spine nodes needs to be separately completed, and then the leaf nodes and the spine nodes are connected to form a spine-leaf architecture. However, in this embodiment of this application, a DSL matrix with four rows and four columns may be established only based on 16 switching blocks whose bandwidths are 1.6 Tbps. Connection manners of the switching blocks are consistent, for example, fan-out bus connection is used, thereby simplifying bus design. In addition, the switching blocks are divided into at least two groups, intra-group switching blocks switch data through the first switching interface, and inter-group switching blocks switch data through the second switching interface. For the data that is received through the second switching interface and that is switched between groups, or for data that is received through the input/output port and that is switched from the outside, the switching block performs intra-group switching through the first switching interface, to implement load balancing and similar power consumption of switching blocks in a same group, so that temperatures of some areas of the switching apparatus are prevented from being far higher than those of other areas, and difficulty in design of power supply and heat dissipation is reduced.

Delay reduction: Data packet switching may be completed by switching blocks. For example, for a switching apparatus including 16 switching blocks, each switching block is coupled to four input/output ports, and a bandwidth of each input/output port is 400 Gbps. In this case, a bandwidth of each switching block is 1.6 Tbps, and a bandwidth of the switching apparatus is 25.6 Tbps. Data packet switching between the four input/output ports of each switching block may be completed in the switching block, and data packet switching between any two switching blocks may be completed through at most onetime of forwarding. In addition, the data packet switching only needs to pass through an SW circuit or a routing circuit, and does not need to pass through another circuit, so that a delay may be reduced.

Good scalability: As described in FIG. 6 and FIG. 7, the switching blocks in the switching apparatuses located on different dies may be coupled through the first bus and the second bus, to help extend a scale of the switching apparatus 50 and improve a switching capability of a system.

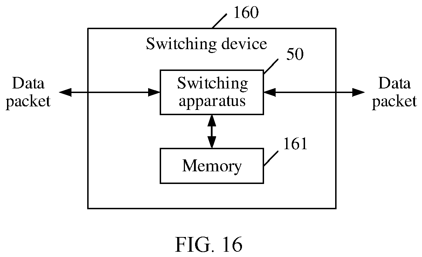

As shown in FIG. 16, embodiments of this application further provide a switching device 160. The switching device 160 may be a switching machine. The switching device 160 includes at least one switching apparatus 50 described above and a memory 161 coupled to the switching apparatus 50. The switching apparatus 50 may be a switching chip. The switching apparatus 50 is configured to switch a data packet with another communication device.

Embodiments of this application provide a computer-readable storage medium storing one or more programs. The one or more programs include instructions. When the instructions are executed by a switching apparatus, the switching apparatus is enabled to perform the method shown in FIG. 13.

Embodiments of this application provide a computer program product including instructions. When the instructions are executed by a switching apparatus, the switching apparatus is enabled to perform the method shown in FIG. 13.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiment, and details are not described herein again.

In the several embodiments provided in this application, it should be understood that the disclosed system, device, and method may be implemented in other manners. For example, the described device embodiment is merely an example. For example, division into the modules is merely logical function division and there may be another division manner in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as modules may or may not be physical modules, may be located in one device, or may be distributed in a plurality of devices. A part of or all the modules may be selected according to actual needs to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A switching apparatus, comprising a plurality of switching blocks and a plurality of input/output ports corresponding to the plurality of switching blocks, wherein
the plurality of switching blocks are configured to receive data through the corresponding input/output ports, forward the data to a target switching block of the data in the plurality of switching blocks, and send the data through an input/output port corresponding to the target switching block, wherein the plurality of switching blocks comprise a first switching block;
the plurality of switching blocks are divided into at least two groups of switching blocks, each switching block comprises a first switching interface and a second switching interface, the first switching interface is configured to switch data with a switching block in a same group, and the second interface is configured to switch data with a switching block in a different group; and
the switching apparatus further comprises a control circuit, configured to control, when the first switching block receives the data through a corresponding input/output port or the second switching interface, the first switching block to select the first switching interface to forward the data.

2. The switching apparatus according to claim 1, wherein the control circuit is further configured to control, when the first switching block receives the data through the corresponding input/output port or the second switching interface, the first switching block to select both the first switching interface and the second switching interface to forward the data.

3. The switching apparatus according to claim 1 or 2, wherein the control circuit is further configured to control, when the first switching block receives the data through the first switching interface, the first switching block to select the second switching interface or the corresponding input/output port to forward the data.

4. The switching apparatus according to any one of claims 1 to 3, wherein the switching block further comprises a switching circuit, the switching circuit is coupled to the corresponding input/output port, the first switching interface, and the second switching interface, and the switching circuit is configured to switch data with another switching block and switch data with the corresponding input/output port through the first switching interface and the second switching interface.

5. The switching apparatus according to any one of claims 1 to 3, wherein the switching block further comprises a switching circuit and a routing circuit that are coupled to each other, the switching circuit is coupled to the corresponding input/output port, and the switching circuit is configured to switch data with the routing circuit and the corresponding input/output port; and the routing circuit is coupled to the first switching interface and the second switching interface, and the routing circuit is configured to switch data with another switching block through the first switching interface and the second switching interface.

6. The switching apparatus according to any one of claims 1 to 5, wherein
the target switching block is configured to output the data through the corresponding input/output port in a sequence of receiving the data from the plurality of switching blocks.

7. The switching apparatus according to any one of claims 1 to 6, wherein a same group of switching blocks are disposed on different dies.

8. The switching apparatus according to any one of claims 1 to 7, wherein different groups of switching blocks are disposed on different dies.

9. The switching apparatus according to any one of claims 1 to 8, wherein first switching interfaces of the same group of switching blocks are coupled through a fan-out bus, and second switching interfaces of the different groups of switching blocks are coupled through a fan-out bus.

10. The switching apparatus according to any one of claims 1 to 9, wherein the switching apparatus is a switching chip.

11. The switching apparatus according to any one of claims 1 to 9, wherein the switching block refers to a circuit that has a data switching function.

12. A switching method, applied to the switching apparatus according to any one of claims 1 to 11, wherein the method comprises:
controlling, when a first switching block receives data through a corresponding input/output port or a second switching interface, the first switching block to select a first switching interface to forward the data.

13. The method according to claim 12, wherein the controlling, when a first switching block receives data through a corresponding input/output port or a second switching interface, the first switching block to select a first switching interface to forward the data comprises:
controlling, when the first switching block receives the data through the corresponding input/output port or the second switching interface, the first switching block to select both the first switching interface and the second switching interface to forward the data.

14. The method according to claim 12 or 13, further comprising:
controlling, when the first switching block receives the data through the first switching interface, the first switching block to select the second switching interface or the corresponding input/output port to forward the data.

15. A switching device, comprising the switching apparatus according to any one of claims 1 to 11 and a memory coupled to the switching apparatus, wherein the switching apparatus is a switching chip.

16. A computer-readable storage medium storing one or more programs, wherein the one or more programs comprise instructions; and when the instructions are executed by a switching apparatus, the switching apparatus is enabled to perform the method according to any one of claims 12 to 14.

17. A computer program product comprising instructions, wherein when the instructions are executed by a switching apparatus, the switching apparatus is enabled to perform the method according to any one of claims 12 to 14.
